# EUROPEAN PATENT SPECIFICATION

(11) **EP 2 075 869 B1**
(45) Date of publication and mention of the grant of the patent: **01.05.2013**
(21) Application number: 08022036.1
(22) Date of filing: 18.12.2008
(51) Int. Cl.: H01M 10/04, H01M 10/0587, H01M 10/0525

(54) **Wound-type electrochemical device, and method for manufacturing wound-type electrochemical device**
Gewickelte Elektrochemische Vorrichtung und Verfahren zu deren Herstellung
Dispositif électrochimique enroulé et son procédé de fabrication

(30) Priority: 28.12.2007 JP 2007340256
(43) Date of publication of application: 01.07.2009
(73) Proprietor: TDK Corporation, Tokyo 103-8272 (JP)
(72) Inventor: Ohashi, Yoshihiko, Tokyo 103-8272 (JP); Kougo, Mitsuo, Tokyo 103-8272 (JP); Hinoki, Kiyonori, Tokyo 103-8272 (JP); Katai, Kazuo, Tokyo 103-8272 (JP)
(74) Representative: Grünecker, Kinkeldey, Stockmair & Schwanhäusser

(56) References cited:
- EP-A- 0 928 035
- EP-A- 0 954 043
- EP-A- 0 959 513
- EP-A- 1 318 561
- EP-A- 1 416 571
- JP-A- 5 074 496
- US-A- 6 159 253
- US-A1- 2003 113 616
- US-A1- 2005 123 829
- US-A1- 2006 222 937
- US-B1- 6 569 558
- US-B1- 6 627 343
- US-B1- 6 797 429

## Description

### BACKGROUND OF THE INVENTION

### Field of the Invention

The present invention relates to a wound-type electrochemical device, and a method for manufacturing the wound-type electrochemical device.

### Related Background of the Invention

In recent years, with the reduction in size, the reduction in thickness, and the increase in output power of portable electronic devices, there has been a need for the reduction in size, the reduction in thickness, and the increase in output power of a battery used as the power supply of the portable electronic devices. As such a battery, for example, a wound-type battery comprising a wound body formed by spirally winding a positive electrode and a negative electrode with a separator sandwiched therebetween is used (see Japanese patent laid-open No. 2000-77091 and Japanese patent laid-open No. 2006-278143).
Document EP-A-0 928 035 refers to prismatic batteries having improved high drain capability, wherein a battery structure is provided wherein the laminated electrodes are bent into a bow shape inside the battery casing and the anode and cathode are brought into close connection; and wherein further the two opposite sides of the battery container are bent in the same direction into a bow shape, an the battery container can be prevented from bulging due to increased internal pressure.

### SUMMARY OF THE INVENTION

In manufacturing an elliptic cylindrical wound-type battery (a non-cylindrical wound-type battery) as shown in the above-described Japanese patent laid-open No. 2000-77091 and Japanese patent laid-open No. 2006-278143, a winding core is required in order to form a wound body by winding a positive electrode, a negative electrode, and a separator. The dimensions and shape of the wound-type battery are defined by the dimensions and shape of this winding core.

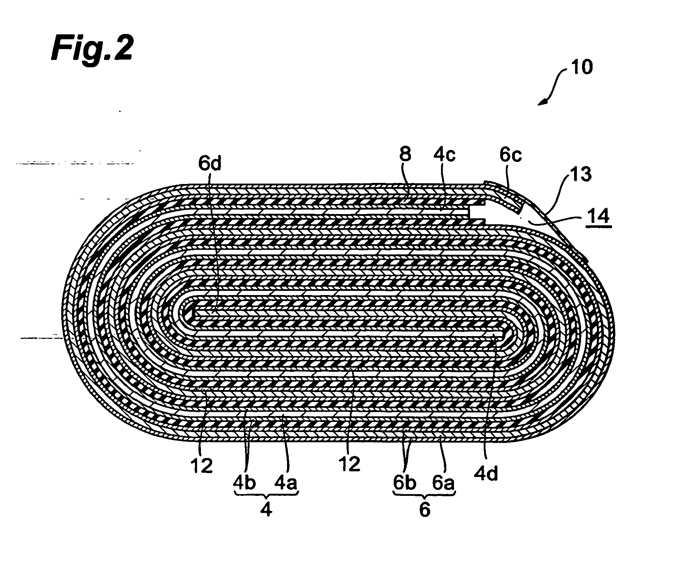

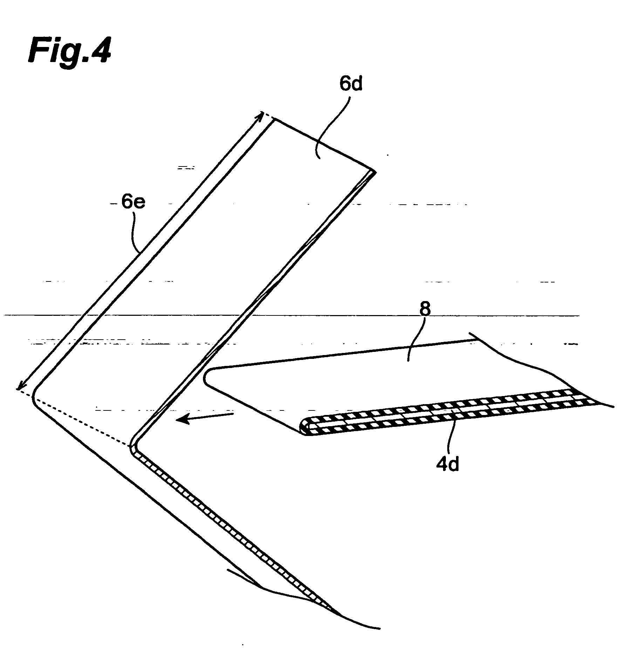

However, in forming the wound body using a winding core different from the positive electrode, the negative electrode, and the separator as shown in the above-described Japanese patent laid-open No. 2000-77091, only the end of either the positive electrode or the negative electrode is wound around the winding core and subsequently the other one of the electrodes is wound therearound, and therefore, a portion where the positive and negative electrodes are not opposed to each other via the separator will be formed in the vicinity of the winding core of the obtained wound body (see Figs. 2, 4 and the like of the above-described Japanese patent laid-open No. 2000-77091). If the portion where the positive and negative electrodes are not opposed to each other is formed, the capacity of the wound-type battery will be reduced.

Moreover, if only -a part of the end of one of the electrodes is wound around the winding core and subsequently the remainder of the one of the electrodes and the other one of the electrodes are wound, then a relative position between the positive and negative electrodes is likely to deviate from a desired position in aligning the positive and negative electrodes. Therefore, the portion where the positive and negative electrodes are not opposed to each other is formed and thereby the capacity of the wound-type battery tends to decrease, or the dimensions or the shape of the obtained wound body tends to deviate from a desired specification.

Furthermore, in the battery shown in the above-described Japanese patent laid-open No. 2000-77091, since the winding core needs to be taken out from the wound body, the wound body tends to deform easily after taking out the winding core.

Moreover, as shown in the above-described Japanese patent laid-open No. 2006-278143, even if a wound body is formed using the end of either the positive electrode or the negative electrode as the winding core, as in the above-described Japanese patent laid-open No. 2000-77091, a portion where the positive and negative electrodes are not opposed to each other via the separator is likely to be formed in the vicinity of the winding core of the obtained wound body, and moreover, a relative position between the positive and negative electrodes is likely to deviate (See Fig. 2 and the like in the above-described Japanese patent laid-open No. 2006-278143). For this reason, also in the wound-type battery shown in the above-described Japanese patent laid-open No. 2006-278143, the capacity tends to decrease or the dimensions or the shape of the wound body tend to deviate from a desired specification.

The present invention has been made in view of the problems the above-described prior arts have. It is an object of the present invention to provide a wound-type electrochemical device capable of increasing the capacity and a method for manufacturing the wound-type electrochemical device capable of increasing the capacity of the obtained wound-type electrochemical device as well as suppressing the deviation in the dimensions of the wound-type electrochemical device or the deformation of the shape thereof.

The invention is defined according to claim 1.

### BRIEF DESCRIPTION OF THE DRAWINGS

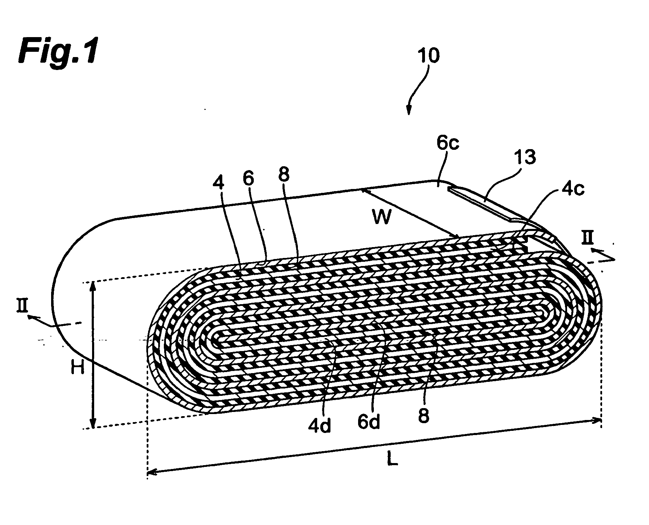

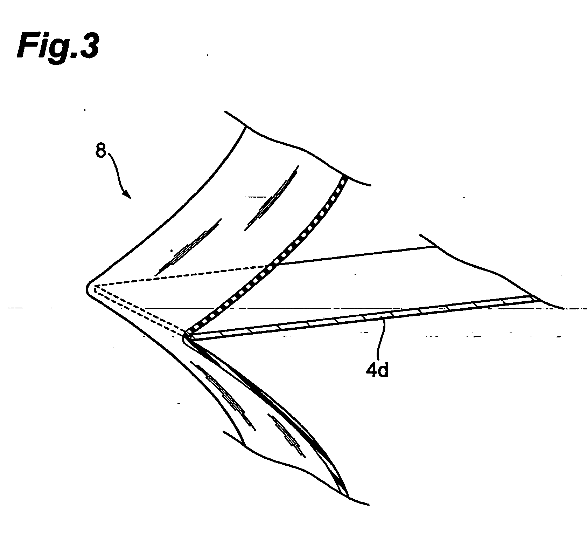

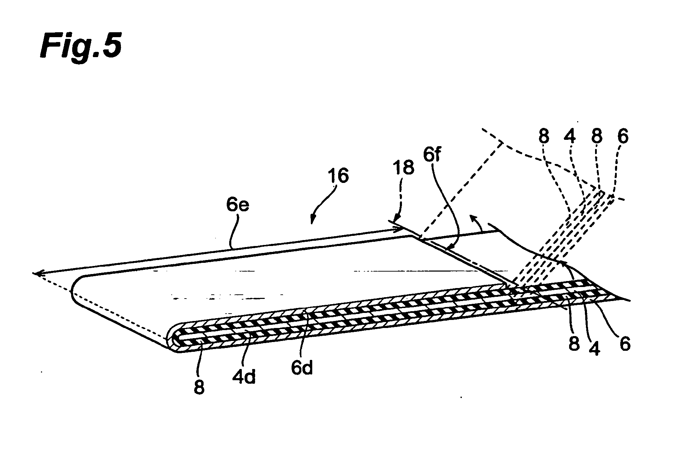

Fig. 1 is a perspective view showing a wound-type lithium ion secondary battery which is a preferred embodiment of a wound-type electrochemical device of the present invention. Fig. 2 is a schematic cross sectional view when the wound-type lithium ion secondary battery shown in Fig. 1 is cut along the II-II line of Fig. 1. Fig. 3 is a perspective view showing a step of a method for manufacturing the wound-type lithium ion secondary battery shown in Fig. 1. Fig. 4 is a perspective view showing a step of the method for manufacturing the wound-type lithium ion secondary battery shown in Fig. 1. Fig. 5 is a perspective view showing a step of the method for manufacturing the wound-type lithium ion secondary battery shown in Fig. 1.

### DESCRIPTION OF THE PREFERRED EMBODIMENTS

Hereinafter, a preferred embodiment of the present invention will be described in detail with reference to the accompanying drawings. Note that, in the drawings, the same reference numeral is given to the same or equivalent portion to omit the duplicating description. Moreover, unless otherwise noted, the positional relationship of the up, down, left, right, and the like shall be based on the positional relationship shown in the drawings. Furthermore, the dimension ratios in the drawings are not limited to the illustrated ratios.

### (Wound-type lithium ion secondary battery)

A wound-type lithium ion secondary battery (hereinafter, denoted as a "battery") 2, which is a preferred embodiment of the present invention, comprises a substantially elliptic wound body 10 formed by winding a belt-like positive electrode 4 and a belt-like negative electrode 6 so as to sandwich a belt-like separator 8 therebetween, as shown in Figs. 1,2. The wound body 10 comprising the positive electrode 4 and the negative electrode 6 having a lead 12 connected thereto, respectively, is enclosed in an outer package (not illustrated) of the battery 2.

The maximum length L in the longitudinal direction of the wound body 10 is in the order of 16 to 18 mm, the maximum length H in the shorter side direction of the wound body 10 is in the order of 1.0 to 1.3 mm, and the width W of the wound body 10 is in the order of 13.5 to 15 mm.

The positive electrode 4 comprises a belt-like positive electrode current collector 4a and a positive electrode active material layer 4b covering both sides of the positive electrode current collector 4a, as shown in Fig. 2. The negative electrode 6 comprises a belt-like negative electrode current collector 6a and a negative electrode active material layer 6b covering both sides of the negative electrode current collector 6a.

Higher coverage factors of the positive electrode active material layer 4b on both sides of the positive electrode current collector 4a and the negative electrode active material layer 6b on both sides of the negative electrode current collector 6a are preferred, respectively. The higher each of the coverage factors, the larger the capacity of the battery 2 becomes. In this embodiment, except a portion where the lead 12 connected to the positive electrode 4 and the negative electrode 6, respectively, is placed, the positive electrode active material layer 4b covers the whole area on both sides of the positive electrode current collector 4a while the negative electrode active material layer 6b covers the whole area on both sides of the negative electrode current collector 6a.

In the wound body 10, both sides of the one-layer positive electrode 4 adjoin the negative electrode 6 via the separator 8, respectively, and both sides of the one-layer negative electrode 6 adjoin the positive electrode 4 via the separator, respectively. Moreover, the end of the negative electrode 6 is interposed in a U-shaped portion which the positive electrode 4 positioned on the center side of the wound body 10 forms, while the end of the positive electrode 4 is interposed in a U-shaped portion which the negative electrode 6 positioned on the center side of the wound body 10 forms, and thus the positive electrode 4 and the negative electrode 6 are arranged in symmetrical positions on the center side. That is, both sides of an end 4d on the center side of the wound body of the one-layer positive electrode 4 adjoin the negative electrode 6 via the separator 8, respectively, and both sides-of an end 6d on the center side of the wound body of the one-layer negative electrode 6 adjoin the positive electrode 4 via the separator, respectively. Note that the after-mentioned winding core portion 16 is arranged on the center side of the wound body 10.

In this embodiment, also on the center side of the wound body 10, both sides of the positive electrode 4 are opposed to the negative electrode 6, respectively, and also both sides of the negative electrode 6 are opposed to the positive electrode 4, respectively, and thus a portion where the positive electrode 4 and the negative electrode 6 are not opposed to each other will not be formed on the center side of the wound body 10. Moreover, a portion where one of the opposing positive electrode and negative electrode lacks the active material is not formed except at the connection position of the lead. For this reason, in this embodiment, the capacity of the battery 2 can be increased as compared with the conventional batteries.

As shown in Fig. 2. of an end 4c (end on the outer peripheral side of the wound body) of the positive electrode 4 and an end 6c (end on the outer peripheral side of the wound body) of the negative electrode 6 arranged on the outer peripheral side of the wound body 10, the end 6c of the negative electrode 6 arranged on the outermost peripheral side extends further in the winding direction (longitudinal direction of the negative electrode 6) of the wound body 10 than the end 4c of the positive electrode 4 arranged on the inner peripheral side. For this reason, a gap is produced between the end 6c of the negative electrode 6 extending in the winding direction of the wound body 10 and the outer periphery of the wound body 10. Then, the end 6c of the negative electrode 6 extending in the winding direction of the wound body 10 is fixed to the outer peripheral surface of the wound body 10 with an adhesive tape 13 so as to be pushed against the inner peripheral side of the wound body 10.

By fixing the end 6c of the negative electrode 6, which extends in the winding direction of the wound body 10, to the outer peripheral surface of the wound body 10 with the adhesive tape 13 so as to be pushed against the inner peripheral side of the wound body 10, the end 6c of the negative electrode 6 and the adhesive tape 13 are partly pressed into a gap 14. For this reason, a step in the outer peripheral surface of the wound body 10 in each of the ends 4c, 6c of the positive electrode 4 and the negative electrode 6 is reduced, and the outer periphery of the wound body 10 becomes substantially flat, and thus the wound body 10 can be accommodated easily in the outer package of the battery 2.

In order to reliably fix each of the ends 4c, 6c of the positive electrode 4 and the negative electrode 6 to the outer peripheral surface of the wound body 10, the thickness of the adhesive layer of the adhesive tape 13 needs to be secured. On the other hand, it is preferable to thin the thickness of the adhesive layer of the adhesive tape 13 in order to flatten the outer periphery of the wound body 10, but there is a limit in thinning the adhesive tape 13 because the thinner adhesive layer will decrease the adhesion force of the adhesive tape 13. In this embodiment, since the adhesive tape 13 is partly pushed into the gap 14 between the end 6c of the negative electrode 6 and the outer periphery of the wound body 10, the outer periphery of the wound body 10 can be made substantially flat even if the thick adhesive tape 13 is used.

In the conventional wound bodies, since the end on the outer peripheral side of the wound body arranged on the outermost peripheral side does not extend further in the winding direction of the wound body than the end on the outer peripheral side of the wound body arranged on the inner peripheral side, it is difficult to reduce a step in the outer peripheral surface of the wound body at the ends on the outer peripheral side of the wound body of the positive and negative electrodes, and also a step caused by the thickness of a fixing member for fixing the end on the outer peripheral side of the wound body to the outer peripheral surface of the wound body is likely to occur. For this reason, in the conventional wound bodies, irregularities are formed in the outer peripheral surface, and the dimensions and shapes of the wound body do not match with those of the outer package, and as a result, the wound body might not be accommodated in the outer package. However, in this embodiment, the occurrence of these problems can be suppressed.

As the positive electrode current collector 4a and the negative electrode current collector 6a, a current collector used in the known electrochemical device can be used, and for example, a belt-like shaped copper, aluminum, nickel, or the like can be used.

The positive electrode active material layer 4b contains a positive active material (cathode active material), a conductive auxiliary agent, a binder, and the like. The cathode active material is not limited in particular as long as it allows the occlusion and release of lithium ions, the desorption and insertion (intercalation) of lithium ions, or the doping and undoping of lithium ions and counter anions (e.g., PF₆⁻) of the lithium ions to be carried out reversibly, and the well-known electrode active materials can be used. The examples of such an active material include cobalt acid lithium (LiCoO₂), nickel acid lithium (LiNiO₂), lithium manganese spinel (LiMn₂O₄), and composite metal oxides expressed by the general formula: LiNiₓCo_{y}Mn_{z}MₐO₂ (x+y+z+a=1, 0≤x≤1, 0≤y≤1, 0≤z≤1, 0≤a≤1, where M is one or more kinds of elements selected from Al, Mg, Nb, Ti, Cu, Zn, and Cr), a lithium vanadium compound (LiV₂O₅), olivine-type LiMPO₄ (where, M denotes one or more kinds of elements selected from Co, Ni, and Mn, or Fe, Mg, Nb, Ti, Al. and Zr, or VO), and lithium titanate (Li₄Ti₅O₁₂), and other such composite metal oxides.

The negative electrode active material layer 6b contains a negative electrode active material (anode active material), a conductive auxiliary agent, a binder, and the like. The anode active material is not limited in particular as long as it allows the occlusion and release of lithium ions, the desorption and insertion (intercalation) of lithium ions, or the doping and undoping of lithium ions and counter anions (e.g., PF₆⁻) of the lithium ions to be carried out reversibly, and the well-known anode active materials can be used. The examples of such an active material include a carbon material such as natural graphite, synthetic graphite, graphitization resistant carbon, graphitizable carbon, or low-temperature calcination carbon, a metal such as Al, Si, or Sn, that can combine with lithium, an amorphous compound containing an oxide such as SiO, SiOₓ, SiO₂, or SnO₂, as the principal component, lithium titanate (Li₄Ti₅O₁₂), and TiO₂. Among them, the carbon material -is preferable, and a carbon material whose interlayer distance d₀₀₂ is from 0.335 to 0.338 nm and in which the crystallite size Lc₀₀₂ is from 30 to 120 nm is more preferable. Examples of carbon materials which satisfy these conditions include synthetic graphite, MCF (mesocarbon fiber), and MCMB (mesocarbon microbeads). Note that the above-described interlayer distance d₀₀₂ and crystallite size L₀₀₂ can be determined by X-ray diffraction.

As the separator 8, for example, the one formed from an electrically insulating porous body can be used. Examples of the electrically insulating porous body include single-layer or laminated films composed of polyethylene, polypropylene, or polyolefin; stretched films of mixtures of resins; or fiber nonwoven cloth composed of one or more kinds of material selected from the group consisting of cellulose, polyester, and polypropylene.

The thickness of the positive electrode current collector 4a or the negative electrode current collector 6a is in the order of 6 to 25 µm. The thickness of the positive electrode active material layer 4b or the negative electrode active material layer 6b is in the order of 20 to 200 µm. The thickness of the separator 8 is in the order of 0.05 to 10 µm. The thickness of the adhesive tape 13 is in the order of 30 µm.

### (Method for manufacturing the wound-type lithium ion secondary battery)

In the method for manufacturing the wound-type lithium ion secondary battery (battery 2) according to an embodiment of the present invention, the wound body 10 is formed using one belt-like positive electrode 4, one belt-like negative electrode 6, and one belt-like separator 8.

The positive electrode 4, where the whole area on both sides of the -belt-like positive electrode current collector 4a except the connection portion of the lead 12 is coated with the positive electrode active material layer 4b, is prepared. The negative electrode 6, where the whole area on both sides of the belt-like negative electrode current collector 6a except the connection portion of the lead 12 is coated with the negative electrode active material layer 6b, is prepared.

The longitudinal length of the positive electrode 4 is in the order of 9 to 12 cm, the shorter-side length thereof is in the order of 1.0 to 1.5 cm, and the thickness thereof is in the order of 40 to 80 µm. The dimensions of the negative electrode 6 are almost the same as those of the positive electrode 4.

The longitudinal length of the separator 8 is preferably no less than two times the longitudinal length of the positive electrode 4. This allows both sides of the positive electrode 4 to be covered reliably with the separator 8. The shorter side length of the separator 8 is almost the same as that of the positive-electrode 4-and the negative electrode 6.

In manufacturing the battery 2, first as shown in Fig. 3, the belt-like separator 8 is folded in the longitudinal direction. Note that the separator 8 is preferably folded at the center portion in the longitudinal direction. This allows both sides of the positive electrode 4 to be covered uniformly with the separator 8.

Next, the belt-like positive electrode 4 is sandwiched by the separator 8 from the longitudinal end 4d side, and both sides of the positive electrode 4 were covered with the separator 8. Note that in sandwiching the positive electrode 4 by the separator 8, the tip of the end 4d of the positive electrode 4 is pushed against the folding line of the separator 8. Note that the longitudinal end 4d of the positive electrode 4 is the end opposite to the end 4c of the positive electrode 4 arranged on the outer peripheral side of the wound body 10.

Next, as shown in Fig. 4, the longitudinal end 6d side of the negative electrode 6 is folded in the longitudinal direction of the negative electrode 6. Then, the end 4d of the positive electrode 4 sandwiched by the separator 8 is sandwiched by the end 6d of the negative electrode 6 to form the winding core portion 16 comprising the end 4d of the positive electrode 4 sandwiched by the separator 8, and the end 6d of the negative electrode 6, as shown in Fig. 5. Note that the longitudinal end 6d of the negative electrode 6 is the end opposite to the end 6c of the negative electrode 6 arranged on the outer peripheral side of the wound body 10. Moreover, as shown in Fig. 4, when the end 4d of the positive electrode 4 sandwiched by the separator 8 is sandwiched by the end 6d of the negative electrode 6, the tip of the end 4d of the positive electrode 4 sandwiched by the separator 8 is pushed against the folding line of the negative electrode 6. Moreover, as shown in Figs. 4 and 5, the longitudinal length 6e of the end 6d of the negative electrode 6 coincides with the longitudinal length of the winding core portion 16.

Next, as shown in Fig. 5, the positive electrode 4, both sides of which are covered with the separator 8, and the negative electrode 6 are wound around the winding core portion 16 at the same time. Note that in starting the winding, the positive electrode 4, both sides of which are covered with the separator 8, and the negative electrode 6 are folded back to the winding core portion 16 side along a tip 6f (a folding line 18 parallel to the shorter side of the winding core portion 16) of the end 6d of the negative electrode 6.

After the positive electrode 4, both sides of which are covered with the separator 8, and the negative electrode 6 are wound around the winding core portion 16 at the same time, as shown in Figs. 1 and 2 the end 4c of the positive electrode 4 and the end 6c of the negative electrode 6 arranged on the outer peripheral side of the wound body 10 are fixed to the wound body with the adhesive tape 13, and thus the wound body 10 is completed. The wound body 10 comprising the positive electrode 4 and the negative electrode 6 having the lead 12 connected thereto, respectively, is enclosed in the outer package (not illustrated) of the battery 2, and thus the battery 2 is completed.

In this embodiment, since the end 4d of the positive electrode 4 sandwiched by the separator 8 is sandwiched by the end 4d of the negative electrode 6 to form the winding core portion 16, the positive -electrode 4, both sides of which are covered with the active material, and the negative electrode 6 can be opposed to each other also in the winding core portion 16. That is, in the battery 2 obtained by the above-described manufacturing method, a portion where the positive and negative electrodes are not opposed to each other will not be formed on the center side of the wound body 10 unlike the conventional batteries. Moreover, in the battery 2, a portion where one of the opposing positive electrode 4 and negative electrode 6 lacks the active material is not formed except at the connection position of the lead 12. For this reason, in this embodiment, the battery 2 having a large capacity as compared with the conventional batteries can be -manufactured.

Moreover, in this embodiment, first, the winding core portion 16 comprising parts of the each positive electrode 4, negative electrode 6, and separator 8 is formed, and subsequently, the positive electrode 4, the negative electrode 6, and the separator 8 are wound around the winding core portion at the same time. That is, in this embodiment, since the alignment between the positive electrode 4, the negative electrode 6, and the separator 8 is carried out in forming the winding core portion 16 prior to winding these electrodes and separator, the alignment between the positive electrode 4 and the negative electrode 6 does not need to be carried out in the course of the winding unlike in the related arts, and the relative position between the positive electrode 4 and the negative electrode 6 is unlikely to deviate from a desired position. For this reason, in this embodiment, a portion where the positive electrode 4 and the negative electrode 6 are not opposed to each other is unlikely to be formed, a decrease in the capacity -of the battery 2 can be suppressed, and deviations of the dimensions or the shape of the obtained wound body 10 from a desired specification can be suppressed.

In this embodiment, the dimensions and shape of the wound body 10 are defined by the dimensions and shape of the winding core portion 16, and the dimensions and shape of the winding core portion 16 are defined by the longitudinal length 6e of the end 6d of the negative electrode 6 to be folded and the shorter side length of the negative -electrode-6 (see Figs. 4 and 5). Since the longitudinal length 6e of the end 6d of the negative electrode 6 and the shorter side length of the negative electrode 6 can be set easily and precisely, the dimensions and shape of the wound body 10 also can be set easily and precisely. For example, as the longitudinal length 6e of the end 6d of the negative electrode 6 is lengthened further, the maximum length L in the longitudinal direction of the wound body 10 becomes longer and accordingly the flat wound body 10 can be formed.

Moreover, in this embodiment, since the winding core is not required separately from the positive electrode 4, the negative electrode 6, and the separator 8, the winding core does not need to be taken out from the wound body 10 and also a deformation of the wound body 10 associated with taking out the winding core will not occur either.

As described above, a preferred embodiment of the present invention has been described in detail, but the present invention is not limited to the above-described embodiment.

For example, in the description of the above embodiment, although a case where a wound-type electrochemical device is an lithium ion secondary battery has bee described, the wound-type electrochemical device of the present invention is not limited to the lithium ion secondary battery but may be secondary batteries other than the lithium ion secondary battery such as a metal lithium secondary battery, a lithium capacitor, or an electric double layer capacitor. Note that in the case of the electrochemical device other than the lithium ion secondary battery, as the electrode active material the one suitable for the respective electrochemical devices may be used. Moreover, in the case of the electric double layer capacitor, for example, as the active material contained in a cathode active material-containing layer and an anode active material-containing layer, acetylene black, graphite, black lead, activated carbon, and the like are used. Moreover, as an electrolytic solution, for example, the one having a quarternary ammonium salt such as tetraethylammonium tetrafluoroborate dissolved in an organic solvent, such as a propylene carbonate, a diethylene carbonate, or acetonitrile is used.

Moreover, the wound-type electrochemical device of the present invention can be used also for applications, such as the power supplies for a self-propelled micromachine or an IC card, and the distributed power supplies arranged on or inside a printed circuit board.

Moreover, in the battery 2 and the method for manufacturing the battery 2 described above, even if the positive electrode 4 and the negative electrode 6 are replaced with each other, the effects of the present invention can be obtained.

## Claims

1. A wound-type electrochemical device (2) comprising a wound body (10) formed by winding a belt-like positive electrode (4) and a belt-like negative electrode (6), each of the electrodes (4, 6) being a current collector (4a, 6a) having an active material layer (4b, 6b) formed on both sides thereof, so as to sandwich a belt-like separator (8) therebetween,
wherein the end (6c) of the electrode (6) on the outer peripheral side of the wound body (10) arranged on the outermost peripheral side, the end (6c) extending in the winding direction of the wound body (10), is fixed to the outer peripheral surface of the wound body (10) in such a way to press the end (6c) against the inner peripheral side;
wherein both sides of an end (4d) on a center side of the wound body (10) of the positive electrode (4) adjoin the negative electrode (6) via the separator (8), while both sides of an end (6d) on the center side of the wound body (10) of the negative electrode (6) adjoin the positive electrode (4) via the separator (8);
wherein the end (6c) of the electrode (6) on the outer peripheral side of the wound body (10) arranged on an outermost peripheral side extends further in a winding direction of the would body than the end of the separator (8) on the outer peripheral side of the wound body (10) arranged on an inner peripheral side;
wherein the end of the separator (8) extends further in a winding direction of the wound body (10) than the end (4c) of another electrode on the outer peripheral side of the wound body (10) arranged on an inner peripheral side;
wherein the end (6c) of the electrode (6) on the outer peripheral side of the wound body (10) arranged on an outermost peripheral side extends further in a winding direction of the wound body (10) than the end (4c) of another electrode on the outer peripheral side of the wound body (10) arranged on an inner peripheral side.

## Patentansprüche

1. Elektrochemische Vorrichtung (2) vom gewickelten Typ, umfassend einen gewickelten Körper (10), der durch Aufwickeln einer bandartigen positiven Elektrode (4) und einer bandartigen negativen Elektrode (6) geformt ist, wobei jede der Elektroden (4, 6) ein Stromabnehmer (4a, 6a) ist, der eine aktive Materialschicht (4b, 6b) hat, die auf beiden Seiten davon derart ausgebildet ist, dass ein bandartiger Separator (8) dazwischen eingeschoben ist,
wobei an der äußeren Umfangsseite des gewickelten Körpers (10) das Ende (6c) der Elektrode (6), die an der äußersten Umfangsseite angeordnet ist, wobei sich das Ende (6c) in die Wickelrichtung des gewickelten Körpers (10) erstreckt, derart an der äußeren Umfangsoberfläche des gewickelten Körpers (10) befestigt ist, dass das Ende (6c) gegen die innere Umfangsseite gedrückt wird;
wobei an einer mittleren Seite des gewickelten Körpers (10) beide Seiten eines Endes (4d) der positiven Elektrode (4) über den Separator (8) an die negative Elektrode (6) angrenzen, während an der mittleren Seite des gewickelten Körpers (10) beide Seiten eines Endes (6d) der negativen Elektrode (6) über den Separator (8) an die positive Elektrode (4) angrenzen;
wobei an der äußeren Umfangsseite des gewickelten Körpers (10) das Ende (6c) der Elektrode (6), die an einer äußersten Umfangsseite angeordnet ist, sich weiter in eine Wickelrichtung des gewickelten Körpers (10) erstreckt als an der äußeren Umfangsseite des gewickelten Körpers (10) das Ende des Separators (8), der an einer inneren Umfangsseite angeordnet ist;
wobei an der äußeren Umfangsseite des gewickelten Körpers (10) sich das Ende des Separators (8) weiter in eine Wickelrichtung des gewickelten Körpers (10) erstreckt als das Ende (4c) einer weiteren Elektrode, die an einer inneren Umfangsseite angeordnet ist;
wobei an der äußeren Umfangsseite des gewickelten Körpers (10) sich das Ende (6c) der Elektrode (6), die an einer äußersten Umfangsseite angeordnet ist, weiter in eine Windungsrichtung des gewickelten Körpers (10) erstreckt als das Ende (4c) einer weiteren Elektrode an der äußeren Umfangsseite des gewickelten Körpers (10), die an einer inneren Umfangsseite angeordnet ist.

## Revendications

1. Dispositif électrochimique enroulé (2) comprenant un corps enroulé (10) formé en enroulant une électrode positive en forme de bande (4) et une électrode négative en forme de bande (6), chacune des électrodes (4, 6) constituant un collecteur de courant (4a, 6a) comportant une couche de matière active (4b, 6b) formée sur leurs deux faces, de façon à intercaler en sandwich entre elles un séparateur en forme de bande (8),
dans lequel l'extrémité (6c) de l'électrode (6) sur la face périphérique externe du corps enroulé (10) est agencée sur la face périphérique la plus externe, l'extrémité (6c) s'étendant dans la direction de l'enroulement du corps enroulé (10) est fixée sur la surface périphérique externe du corps enroulé (10) de telle manière à appuyer l'extrémité (6c) contre la face périphérique interne ;
dans lequel les deux faces d'une extrémité (4d) côté central du corps enroulé (10) de l'électrode positive (4) sont à proximité immédiate de l'électrode négative (6) par l'intermédiaire du séparateur (8), tandis que les deux faces d'une extrémité (6d) côté central du corps enroulé (10) de l'électrode négative (6) sont à proximité immédiate de l'électrode positive (4) par l'intermédiaire du séparateur (8) ;
dans lequel l'extrémité (6c) de l'électrode (6) sur la face périphérique externe du corps enroulé (10) agencée sur la face périphérique la plus externe s'étend davantage dans la direction de l'enroulement du corps enroulé que l'extrémité du séparateur (8) sur la face périphérique externe du corps enroulé (10) agencée sur la face périphérique interne ;
dans lequel l'extrémité du séparateur (8) s'étend davantage dans la direction de l'enroulement du corps enroulé (10) que l'extrémité (4c) d'une autre électrode sur la face périphérique externe du corps enroulé (10) agencée sur la face périphérique interne ;
dans lequel l'extrémité (6c) de l'électrode (6) sur la face périphérique externe du corps enroulé (10) agencée sur la face périphérique la plus externe s'étend davantage dans la direction de l'enroulement du corps enroulé (10) que l'extrémité (4c) d'une autre électrode sur la face périphérique externe du corps enroulé (10) agencée sur la face périphérique interne.
